# EUROPEAN PATENT SPECIFICATION

(11) **EP 3 435 563 B1**
(45) Date of publication and mention of the grant of the patent: **10.06.2020**
(21) Application number: 17183089.6
(22) Date of filing: 25.07.2017
(51) Int. Cl.: H04B 17/10, H04B 17/14

(54) **APPARATUS AND METHOD FOR DETERMINATION OF A TIME DELAY**
VORRICHTUNG UND VERFAHREN ZUR BESTIMMUNG EINER ZEITVERZÖGERUNG
APPAREIL ET PROCÉDÉ DE DÉTERMINATION D'UN RETARD

(43) Date of publication of application: 30.01.2019
(73) Proprietor: NXP B.V., 5656 AG Eindhoven (NL)
(72) Inventor: Spiess, Bernhard, 5656 AG Eindhoven (NL)
(74) Representative: Hardingham, Christopher Mark

(56) References cited:
- WO-A1-2013/056398
- WO-A1-2013/112443
- US-A1- 2015 029 053

## Description

The present disclosure relates to an apparatus for determination of a time delay attributable to an antenna and its associated antenna circuitry. It also relates to a device including said apparatus.

International patent application publication number WO 2013/056398A1 discloses a method in an antenna array system for calibration of an antenna apparatus. The method includes estimating coarse receive delays for the receive changes and coarse transmit delays for the transmit chains.

International patent application publication number WO 2013/112443 A1 discloses an antenna system having an antenna array with multiple sub-arrays, each having one or more antenna elements, which is calibrated using a distributed calibration antenna element, such as a leaky coaxial cable, that spans across at least two and possibly all of the sub-arrays. To calibrate the transmit (TX) paths of the sub-arrays, TX calibration test signals are transmitted by the sub-arrays, captured by the distributed calibration element, and processed by a corresponding calibration radio. To calibrate the receive (RX) paths of the sub-arrays, an RX calibration test signal is generated by the calibration radio, transmitted by the distributed calibration element, captured by the sub-arrays, and processed by their corresponding radios. Cross-correlation between the calibration and captured signals is performed to derive the complex gain of each sub-array transmitter and receiver, which provides information for aligning the gain, phase, and delay of the different TX and RX paths of the antenna array.
According to a first aspect of the present disclosure there is provided an apparatus comprising:
a transceiver;
a first antenna connected to the transceiver via antenna circuitry to provide for one or more of impedance matching and filtering;
a second antenna connected to the transceiver bypassing said antenna circuitry;
a calibration device configured to determine a time delay introduced by at least the first antenna and said antenna circuitry based on at least one of:
   a signal sent by the transceiver from the first antenna and received by the transceiver via the second antenna; and
   a signal sent by the transceiver from the second antenna and received by the transceiver via the first antenna.

The second antenna comprises one or both of:
i) an integrated circuit package terminal of an integrated circuit package, the apparatus formed in said integrated circuit package; and
ii) a parasitic antenna of the apparatus.

In one or more embodiments, the apparatus includes a switch arrangement configured to provide one or both of:
i) a connection from a transmitter element of the transceiver, for providing said signal, that is switchable to connect to the first antenna or to the second antenna;
ii) a connection to a receiver element of the transceiver, for receiving said signal, that is switchable to connect to the first antenna or to the second antenna.

In one or more embodiments, the apparatus is configured to provide a calibration mode and a normal-operation mode;
wherein, during the calibration mode, the switch arrangement is configured to connect one of the transmitter element and the receiver element to the second antenna; and
wherein, during the normal-operation mode, the switch arrangement is configured to connect the one of the transmitter element and the receiver element to the first antenna.

In one or more embodiments, the apparatus is configured to provide a calibration mode and a normal-operation mode and, in the calibration mode, the calibration device is configured to determine the time delay and, in the normal-operation mode, the apparatus is configured to perform time-of-flight determination of signals sent between the apparatus and at least one remote device using, in part, the time delay determined by the calibration device.

In one or more embodiments, the transceiver of the apparatus comprises an ultra-wide band transceiver.

In one or more embodiments, the calibration device is configured to determine the time delay at one or more of the following times:
i) at start-up of the apparatus;
ii) periodically;
iii) in response to a need to send a message for use in ranging prior to sending of a ranging signal from said first antenna.

In one or more embodiments, the calibration device is configured to determine a cross-correlation function based on cross-correlation of the signal sent from one of the first and second antenna and the signal received via the other of the first and second antenna, the time delay based on identification of a peak in the cross-correlation function subsequent to an initial peak.

In one or more embodiments, the time delay comprises a time delay introduced by at least the first antenna, said antenna circuitry and analogue signal processing components of the apparatus.

As disclosed is a method of calibrating an apparatus to account for a time delay introduced by at least a first antenna and antenna circuitry of said first antenna, wherein the apparatus includes a transceiver, said first antenna connected to the transceiver via said antenna circuitry configured to provide for one or more of impedance matching and filtering; a second antenna connected to the transceiver bypassing said antenna circuitry, the method comprising:
determining said time delay based on at least one of:
a signal sent by the transceiver from the first antenna and received by the transceiver via the second antenna; and
a signal sent by the transceiver from the second antenna and received by the transceiver via first antenna.

In one or more embodiments, determining said time delay includes performing cross-correlation on the signal sent by the transceiver and the signal received by the transceiver. In one or more embodiments, the method includes a step, prior to said determining step, of switching to a calibration mode in which a transmitter element of the transceiver is configured to send said signal from one of the first and second antennas and a receiver element is configured to receive said signal sent by the transmitter element from the other of the first and second antennas.

In one or more embodiments, switching to said calibration mode comprises switching from a normal-operation mode in which the transceiver is configured to both send and receive signals via the first antenna.

In one or more embodiments, the method includes the step of providing for sending of a ranging signal from the first antenna and receiving a signal from a remote device sent in response to said ranging signal, the apparatus configured to determine a time of flight of said ranging signal and the response thereto using, in part, the determined time delay.

According to a third aspect of the present disclosure there is provided a device including the apparatus of the first aspect, the device comprising one of an automotive key fob, a vehicle comprising an access control system of which the apparatus forms part and an access control system.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

One or more embodiments will now be described by way of example only with reference to the accompanying drawings in which:
Figure 1 shows an example of time of flight determination;
Figure 2 shows a first example embodiment of an apparatus;
Figure 3 shows a second example embodiment of an apparatus;
Figure 4 shows an example embodiment of a device including said apparatus;
Figure 5 shows an example cross-correlation function; and
Figure 6 shows a flowchart illustrating an example embodiment of a method.

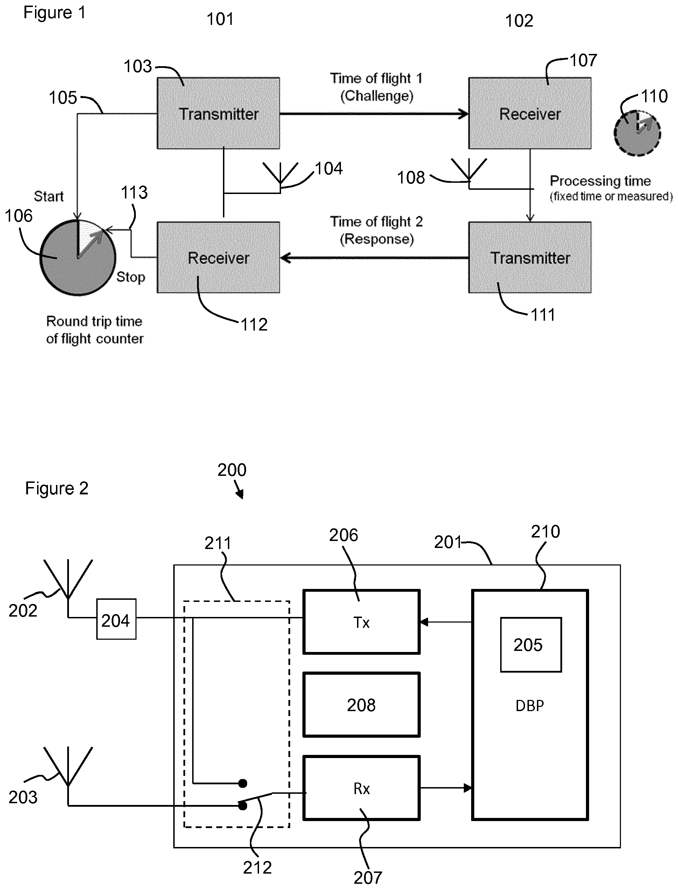

With reference to figure 1, ranging involves the sending and receiving of signals between a first device 101 and a remote, second device 102 and determining the time of flight of the signal between the devices 101, 102. Figure 1 shows the transmission of a first signal from a transmitter element 103 of the first device 101 via an antenna 104. Arrow 105 indicates the start of a timer 106 based on the transmission of first signal, labelled "challenge". A receiver element 107 of the second device 102 receives said signal via an antenna 108. The second device 102 may send a response signal and may take time to process the challenge signal received and generate the response signal. Timer 110 illustrates the processing delay introduced by the second device 102, which may be included in the response message. A transmitter element 111 of the second device 102 sends the response signal via the antenna 108. A receiver element 112 of the first device 101 receives said response signal and arrow 113 indicates the stopping of the timer 106.

The time of flight of the signal between the first device 101 and the second device 102 may be used to yield the distance between the devices 101, 102. The accuracy of the time of flight may be important for accurate determination of the distance between the devices 101, 102, termed "ranging". The time measured by timer 106 may comprise a function of the actual time of flight, the processing delay at the second device 102 measured by timer 110, a processing delay at the first device 101 and a delay introduced by the antennas 104, 108 and their associated circuitry.

The processing delays may be measured by circuitry (not shown) or otherwise determined and can thus be accounted for. However, the delay introduced by the antennas and their circuitry may be more difficult to account for. Further, the antenna delay may vary in use or from device to device due to manufacturing differences or factors such as age and temperature.

Figure 2 shows an example apparatus 200 comprising a transceiver 201, a first antenna 202 and a second antenna 203. The first antenna 202 is connected to the transceiver 201 via antenna circuitry 204. The antenna circuitry 204 may provide for filtering of a signal sent to the first antenna 202 from the transceiver 201 or filtering of a signal received by the first antenna prior to receipt by the transceiver 201. The antenna circuitry may alternatively or in addition provide for impedance matching. It will be appreciated that other functionality may be provided by the antenna circuitry 204 depending on the application of the transceiver and/or any transmission/reception requirements or limitations. The antenna circuitry 204 and the first antenna 202 may introduce a delay into the time taken by a signal to be transmitted and/or received as the signal must pass through the antenna circuitry 204. As discussed in relation to figure 1, it may be important to account for time delays, particularly if the apparatus 200 is configured to perform ranging by time of flight determination.

The second antenna 203 is connected to the transceiver 201 but does not connect via the antenna circuitry 204. In one or more examples, the connection between the second antenna 203 and the transceiver is absent of an impedance matching network. In one or more examples, the connection between the second antenna 203 and the transceiver is absent of circuitry to provide for filtering of a signal.

The apparatus 200 includes a calibration device 205 configured to determine a time delay introduced by at least the first antenna 202 and said antenna circuitry 204 based on at least one of:
a signal sent by the apparatus 200 from the first antenna 202 and received by the apparatus 200 via the second antenna 203; and
a signal sent by the apparatus 200 from the second antenna 203 and received by the apparatus 200 via first antenna 202.

The first antenna 202 may comprise the default antenna of the apparatus 200 used when the calibration device is not determining the time delay. Thus, during a normal-operation mode the first antenna 202 may be used by the transceiver 201 and the second antenna may not be used, while during a calibration mode both the first and second antennas 202, 203 may be used by the calibration device 205.

The first antenna 202 may be selected from a traveling wave antenna, a monocone antenna, a bowtie antenna, a Vivaldi antenna, a printed monopole antenna or a horn antenna.

The second antenna 203 may only be used for calibration. Accordingly, the second antenna 203 may be of a different type, size or shape in comparison to the first antenna 202. Further, as the second antenna 203 may only be used to receive a signal from the first antenna 202 (which is also part of the apparatus and therefore close by) or send a signal for receipt by the first antenna 202, it does not need to have a high gain nor is it required to be particularly efficient.

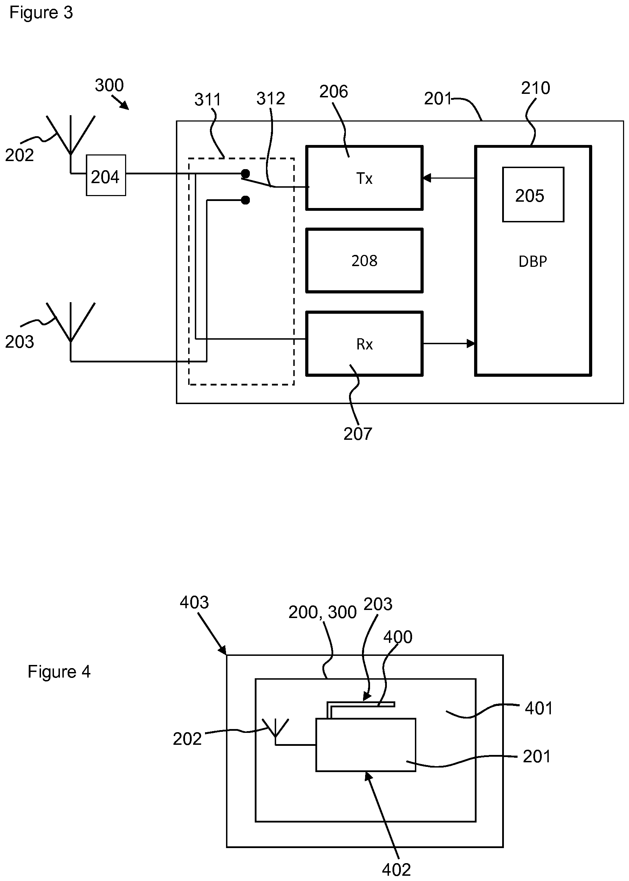

In one or more examples, and as shown in figure 4, the second antenna 203 comprises a metal trace 400 formed on a substrate 401 that is connected to the transceiver 201. Figure 4 shows the transceiver 201 formed within an integrated circuit package 402 that is mounted on substrate 401. The substrate 401, in this example, comprises a printed circuit board (PCB). A pin or output pad (not shown) of the integrated circuit package 402 may provide for connection between the transceiver 201 and the metal trace 400.

In one or more examples, the second antenna 203 may comprise solely an integrated circuit package terminal (not shown) of the integrated circuit package 402 (i.e. without the metal trace 400). At 4-9 GHz it is known for conductive parts of the circuit to act as an antenna and radiate a signal. This may be exploited and rather than provide a dedicated conductive structure to act as an antenna, a terminal, pin or leg of the integrated circuit package 402 may provide the second antenna 203.

In general, the second antenna 203 may be considered to be a "parasitic antenna" of the apparatus 200 such that a part of the apparatus 200 not specifically designed to be an antenna may comprise the second antenna 203.

Turning back to figure 2, in this example, the transceiver 201 comprises a transmitter element 206 for providing one or more signals to the antennas 202, 203 and a receiver element 207 for receiving one or more signals from the antennas 202, 203. The transmitter element 206 and the receiver element 207 may provide for digital to analogue and analogue to digital conversion respectively, modulation/demodulation of the signal and any other analogue domain processing of the signal. The transceiver 201 may include a local oscillator 208 for clock generation for use in modulation by the transmitter element 206 and demodulation by the receiver element 207 and/or synchronisation purposes and/or measurement of the time delay by the calibration device 205.

The transmitter element 206 and the receiver element 207 may receive signals from a digital baseband processing element 210, which may provide for digital processing of the signals to be sent and the signals received via the antennas 202, 203 as appropriate.

In this example, the calibration device 205 is shown as part of the digital baseband processing element 210 and it thus operates in the digital domain. However, in other examples, the calibration device 205 may be separate from the digital baseband processing element 210 and may operate in the analogue, digital or mixed signal domains.

Figure 2 shows a first example of a switch arrangement 211. In this example, the transmitter element 206 is configured to always transmit using the first antenna 202. Accordingly, in the normal-operation mode, signals for receipt by one or more remote devices will be emitted by the first antenna 202 and not the second antenna 203. Further, in the calibration mode, any signals sent for the purpose of calibration will also be sent by the first antenna 202.

The switch arrangement 211 provides for control of a connection to the receiver element 207 of the apparatus that is switchable to connect it to the first antenna 202 or to the second antenna 203. Figure 2 shows a switch 212 of the switch arrangement in a position to provide a connection between the second antenna 203 and the receiver element 207.

Thus, in this example, during the calibration mode, the switch arrangement 211 is configured to connect the receiver element 207 to the second antenna 203 and, during the normal-operation mode, the switch arrangement 211 is configured to connect the receiver element 207 to the first antenna 202.

In the calibration mode, the calibration device 205 may provide for sending of a signal, termed here a calibration signal, by the transmitter element 206 using the first antenna 202. Accordingly, the calibration signal will include a time delay introduced by at least the antenna circuitry 204. The calibration signal is received by the receiver element 207 via the second antenna 203, as the switch arrangement 211 connects the receiver element 207 thereto.

The time delay introduced by the antenna 202 and antenna circuitry may then be determined based on the time between sending and receiving the calibration signal. The position of the first antenna 202 relative to the second antenna 203 is, in this example, fixed. Thus, the propagation time of the calibration signal time through space can be deducted leaving the time delay may be due to operation of the antenna circuitry subject to any other known time delays. The determined time delay may then be accounted for when performing time of flight determination in the normal-operation mode.

Figure 3 shows a second example of a switch arrangement 311. The remaining parts of the figure 3 are similar to figure 2 and the same reference numerals have been used.

In this example, the receiver element 207 is configured to always receive signals using the first antenna 202. Accordingly, in the normal-operation mode, signals received from one or more remote devices will be received by the receiver element 207 via the first antenna 202 and not the second antenna 203. Further, in the calibration mode for this example, any signals received for the purpose of calibration will also be received via the first antenna 202.

The switch arrangement 311 provides for control of a connection from the transmitter element 206 of the apparatus that is switchable to connect it to the first antenna 202 or to the second antenna 203. Figure 3 shows a switch 312 of the switch arrangement in a position to provide a connection between the transmitter element 206 and the second antenna 203.

Thus, in this example, during the calibration mode, the switch arrangement 311 is configured to connect the transmitter element 206 to the second antenna 203 and, during the normal-operation mode, the switch arrangement 311 is configured to connect the transmitter element 206 to the first antenna 202.

In the calibration mode, the calibration device 205 may provide for sending of a signal, termed here a calibration signal, by the transmitter element 206 using the second antenna 203. The calibration signal is received by the receiver element 207 via the first antenna 202. Accordingly, the signal will include a delay introduced by at least the antenna circuitry 204 when received by the first antenna 202.

The time delay introduced by the antenna 202 and antenna circuitry may, as before, then be determined based on the time between sending and receiving the calibration signal.

The position of the first antenna 202 relative to the second antenna 203 is, in this example as in the previous example, fixed.

Figures 2 and 3 show examples in which one of the transmitter element 206 and receiver element 207 is switchable such that signal are transmitted/received by either the first antenna 202 or the second antenna 203, depending on a mode of operation. It will be appreciated that different switch arrangements may be possible and, for example, both the transmitter element and the receiver element may be switchable between the two antennas. In one or more examples, further antennas may be provided that may be switchable to for the purpose of determining time delays introduced by the antenna circuitry.

The apparatus 200, 300 may be configured to determine the time delay at various times. For example, the apparatus 200, 300 may enter the calibration mode and the calibration device 205 may be configured to determine the time delay at start-up of the apparatus 200, 300. Accordingly, in response to power being provided to the apparatus, the calibration device 205 may be configured to determine the time delay. In other examples, the calibration device 205 may be configured to determine the time delay periodically or according to a predefined schedule. In one or more examples, the need to perform ranging may provide a prompt for the calibration device to determine the time delay. Accordingly, in response to a user actuation or in response to receipt of a signal from a remote device, the calibration device may, prior to sending and/or receiving a message for use in time of flight determination, provide for sending of a calibration signal between the first and second antennas 202, 203 for determination of the time delay. The time delay may then be accounted for in time of flight determination.

The calibration device 205 may use any desirable method to determine the time delay introduced by the antenna 202 and the antenna circuitry 204. For example, the calibration device may determine time between sending of the calibration signal via one of the first and second antennas and the receipt of the calibration signal via the other of the first and second antennas 202, 203 to be a function where;

Time between sending and receiving the calibration signal = time of flight between antennas + processing delay of transmitter element 206 + processing delay of receiver element 207 + "time delay of at least the antenna circuitry".

The distance between the first and second antennas may be known and therefore the time of flight between antennas may also be known. The processing delay of the transmitter element 206 and receiver element 207 may be known or determined by other means.

In one or more examples, the time delay of at least the antenna circuitry may include the processing delay of the transmitter element 206 and receiver element 207. Accordingly, the calibration device 205, in some examples may determine the time delay introduced by the antenna circuitry and the analogue/mixed domain components 206, 207.

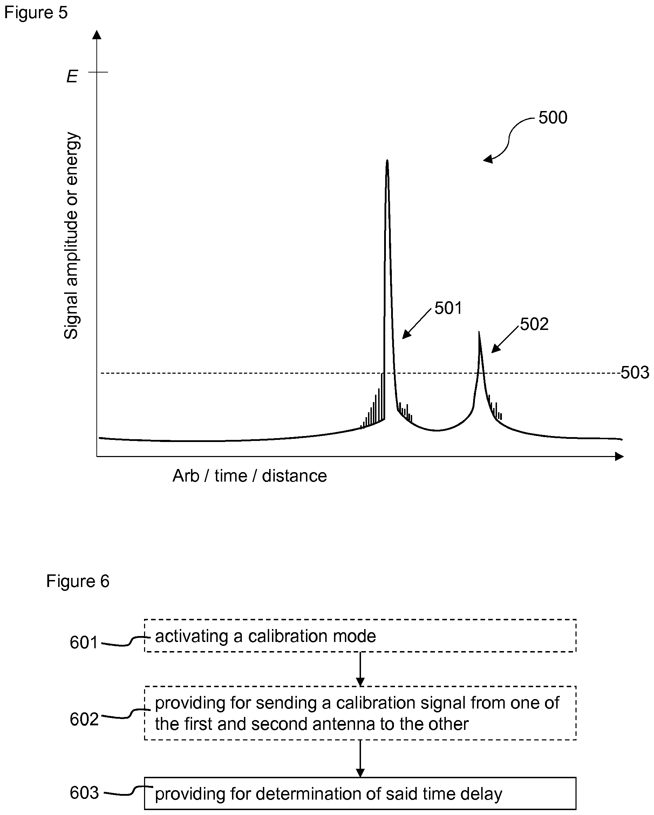

Figure 5 shows a cross-correlation function 500 determined by the calibration device 205 based on cross-correlation of the signal sent from one of the first and second antenna 202, 203 and the signal received via the other of the first and second antenna 202, 203. In one or more examples, the calibration device may be configured to determine such a cross-correlation function in determination of the time delay attributable to the antenna/antenna circuitry.

Such a cross-correlation function 500 will typically have a plurality of peaks 501 , 502, which may be identified using any peak detection algorithm or threshold 503. The first peak 501 may be due to cross talk within the apparatus 200, 300. The second peak 502 may be indicative of the time taken by the calibration signal and may be used in determination of the time delay. Accordingly, the calibration device may be configured to determine the time delay based on identification of a peak 502 in the cross-correlation function 500 subsequent to an initial peak 501. It will be appreciated that other methods may be used to determine the component of the time between sending and receipt of the calibration signal that is attributable to the time delay introduced by at least the antenna and antenna circuitry.

Returning to figure 4, a device 403 is shown that includes the apparatus 200, 300. The transceiver of the apparatus may comprise an ultra-wide band transceiver. The device 403 may comprise one of an automotive key fob, a vehicle comprising an access control system of which the apparatus forms part or an access control system in general among others.

Figure 6 comprises a flowchart to illustrate an example method of calibrating an apparatus to account for a time delay introduced by at least a first antenna and antenna circuitry of said first antenna, wherein the apparatus includes said first antenna connected to the apparatus via said antenna circuitry to provide for one or more of impedance matching and filtering; a second antenna connected to the apparatus bypassing said antenna circuitry, the method comprising:
determining 603 said time delay based on at least one of:
a signal sent by the apparatus from the first antenna and received by the apparatus via the second antenna; and
a signal sent by the apparatus from the second antenna and received by the apparatus via first antenna.

The method may include an optional step 601 prior to step 603 of providing for switching to the calibration mode, such as from the normal-operation mode. The method may further include the optional step of providing 602 for sending of a calibration signal from one of the first 202 and second antenna 203 to the other.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An apparatus (200) comprising:
a transceiver (201);
a first antenna (202) connected to the transceiver via antenna circuitry (204) to provide for one or more of impedance matching and filtering;
a second antenna (203) connected to the transceiver bypassing said antenna circuitry;
a calibration device (205) configured to determine a time delay introduced by at least the first antenna and said antenna circuitry based on at least one of:
a signal sent by the transceiver from the first antenna and received by the transceiver via the second antenna; and
a signal sent by the transceiver from the second antenna and received by the transceiver via the first antenna; wherein the apparatus is **characterized in that** the second antenna comprises one or both of:
i) an integrated circuit package terminal of an integrated circuit package, the apparatus formed in said integrated circuit package; and
ii) a parasitic antenna of the apparatus.

2. The apparatus of claim 1 wherein the apparatus includes a switch arrangement configured to provide one or both of:
i) a connection from a transmitter element of the transceiver, for providing said signal, that is switchable to connect to the first antenna or to the second antenna;
ii) a connection to a receiver element of the transceiver, for receiving said signal, that is switchable to connect to the first antenna or to the second antenna.

3. The apparatus of claim 2, wherein the apparatus is configured to provide a calibration mode and a normal-operation mode;
wherein, during the calibration mode, the switch arrangement is configured to connect one of the transmitter element and the receiver element to the second antenna; and
wherein, during the normal-operation mode, the switch arrangement is configured to connect the one of the transmitter element and the receiver element to the first antenna.

4. The apparatus of any preceding claim, wherein the apparatus is configured to provide a calibration mode and a normal-operation mode and, in the calibration mode, the calibration device is configured to determine the time delay and, in the normal-operation mode, the apparatus is configured to perform time-of-flight determination of signals sent between the apparatus and at least one remote device using, in part, the time delay determined by the calibration device.

5. The apparatus of any preceding claim wherein the transceiver of the apparatus comprises an ultra-wide band transceiver.

6. The apparatus of any preceding claim wherein the calibration device is configured to determine the time delay at one or more of the following times:
i) at start-up of the apparatus;
ii) periodically;
iii) in response to a need to send a message for use in ranging prior to sending of a ranging signal from said first antenna.

7. The apparatus of any preceding claim wherein the calibration device is configured to determine a cross-correlation function based on cross-correlation of the signal sent from one of the first and second antenna and the signal received via the other of the first and second antenna, the time delay based on identification of a peak in the cross-correlation function subsequent to an initial peak.

8. The apparatus of any preceding claim wherein the time delay comprises a time delay introduced by at least the first antenna, said antenna circuitry and analogue signal processing components of the apparatus.

9. A device including the apparatus of any of claims 1 to 8, the device comprising one of an automotive key fob, a vehicle comprising an access control system of which the apparatus forms part and an access control system.

## Patentansprüche

1. Vorrichtung (200), umfassend:
einen Sender-Empfänger (201);
eine erste Antenne (202), die über eine Antennenschaltungsanordnung (204) mit dem Sender-Empfänger verbunden ist, um für eines oder mehreres der Impedanzanpassung und Filterung zu sorgen;
eine zweite Antenne (203), die unter Umgehung der Antennenschaltungsanordnung mit dem Sender-Empfänger verbunden ist;
eine Kalibriervorrichtung (205), die dazu eingerichtet ist, eine Zeitverzögerung zu bestimmen, die durch mindestens die erste Antenne und die Antennenschaltungsanordnung eingeführt wird, basierend auf mindestens einem von:
einem Signal, das durch den Sender-Empfänger von der ersten Antenne gesendet und durch den Sender-Empfänger über die zweite Antenne empfangen wird; und
ein Signal, das durch den Sender-Empfänger von der zweiten Antenne gesendet und durch den Sender-Empfänger über die erste Antenne empfangen wird; wobei die Vorrichtung **dadurch gekennzeichnet ist, dass** die zweite Antenne eines oder beides umfasst von:
i) einem integrierten Schaltungsgehäuseanschluss eines integrierten Schaltungsgehäuses, wobei die Vorrichtung in dem integrierten Schaltungsgehäuse ausgebildet ist; und
ii) einer parasitären Antenne der Vorrichtung.

2. Vorrichtung nach Anspruch 1, wobei die Vorrichtung eine Schalteranordnung aufweist, die dazu eingerichtet ist, eines oder beides bereitzustellen von:
i) einer Verbindung von einem Senderelement des Sender-Empfängers zum Bereitstellen des Signals, die umschaltbar ist, um mit der ersten Antenne oder mit der zweiten Antenne zu verbinden;
ii) einer Verbindung zu einem Empfängerelement des Sender-Empfängers zum Empfangen des Signals, die umschaltbar ist, um mit der ersten Antenne oder mit der zweiten Antenne zu verbinden.

3. Vorrichtung nach Anspruch 2, wobei die Vorrichtung dazu eingerichtet ist, einen Kalibrierungsmodus und einen Normalbetriebsmodus bereitzustellen;
wobei während des Kalibrierungsmodus die Schalteranordnung dazu eingerichtet ist, eines von dem Senderelement und dem Empfängerelement mit der zweiten Antenne zu verbinden; und
wobei während des Normalbetriebsmodus die Schalteranordnung dazu eingerichtet ist, das eine von dem Senderelement und dem Empfängerelement mit der ersten Antenne zu verbinden.

4. Vorrichtung nach einem der vorhergehenden Ansprüche, wobei die Vorrichtung dazu eingerichtet ist, einen Kalibrierungsmodus und einen Normalbetriebsmodus bereitzustellen, und die Kalibriervorrichtung im Kalibrierungsmodus dazu eingerichtet ist, die Zeitverzögerung zu bestimmen, und die Vorrichtung im Normalbetriebsmodus dazu eingerichtet ist, eine Laufzeitbestimmung von Signalen durchzuführen, die zwischen der Vorrichtung und mindestens einer entfernten Vorrichtung gesendet werden, wobei teilweise die durch die Kalibriervorrichtung bestimmte Zeitverzögerung verwendet wird.

5. Vorrichtung nach einem der vorhergehenden Ansprüche, wobei der Sender-Empfänger der Vorrichtung aus einem Ultrabreitband-Sender-Empfänger besteht.

6. Vorrichtung nach einem der vorhergehenden Ansprüche, wobei die Kalibriervorrichtung dazu eingerichtet ist, die Zeitverzögerung zu einem oder mehreren der folgenden Zeitpunkte zu bestimmen:
i) bei der Einschaltung der Vorrichtung;
ii) regelmäßig;
iii) als Reaktion auf die Notwendigkeit, vor dem Senden eines Entfernungsmessungssignals von der ersten Antenne eine Nachricht zur Verwendung bei der Entfernungsmessung zu senden.

7. Vorrichtung nach einem der vorhergehenden Ansprüche, wobei die Kalibriervorrichtung dazu eingerichtet ist, eine Kreuzkorrelationsfunktion basierend auf der Kreuzkorrelation des von einer der ersten und zweiten Antenne gesendeten Signals und des über die andere der ersten und zweiten Antenne empfangenen Signals zu bestimmen, wobei die Zeitverzögerung auf der Identifizierung eines Spitzenwertes in der Kreuzkorrelationsfunktion nach einem anfänglichen Spitzenwert basiert.

8. Vorrichtung nach einem der vorhergehenden Ansprüche, wobei die Zeitverzögerung eine Zeitverzögerung umfasst, die durch mindestens die erste Antenne, die Antennenschaltungsanordnung und analoge Signalverarbeitungskomponenten der Vorrichtung eingeführt wird.

9. Gerät mit der Vorrichtung nach einem der Ansprüche 1 bis 8, wobei das Gerät eines von einem Autoschlüsselanhänger, einem Fahrzeug mit einem Zugangskontrollsystem, zu dem die Vorrichtung gehört, und einem Zugangskontrollsystem umfasst.

## Revendications

1. Appareil (200), comprenant :
un émetteur-récepteur (201) ;
une première antenne (202) reliée à l'émetteur-récepteur par le biais d'une circuiterie d'antenne (204) pour réaliser une adaptation d'impédance et/ou un filtrage ;
une deuxième antenne (203) reliée à l'émetteur-récepteur en évitant ladite circuiterie d'antenne ;
un dispositif d'étalonnage (205) configuré pour déterminer un retard introduit par au moins la première antenne et ladite circuiterie d'antenne sur la base d'au moins un signal parmi :
un signal envoyé par l'émetteur-récepteur depuis la première antenne et reçu par l'émetteur-récepteur par le biais de la deuxième antenne ; et
un signal envoyé par l'émetteur-récepteur depuis la deuxième antenne et reçu par l'émetteur-récepteur par le biais de la première antenne ;
l'appareil étant **caractérisé en ce que** la deuxième antenne comprend :
i) une borne de boîtier de circuit intégré d'un boîtier de circuit intégré, l'appareil étant formé dans ledit boîtier de circuit intégré ; et/ou
ii) une antenne parasite de l'appareil.

2. Appareil selon la revendication 1, lequel appareil comporte un agencement commutateur configuré pour fournir :
i) une liaison à partir d'un élément émetteur de l'émetteur-récepteur, destiné à fournir ledit signal, qui est commutable pour être reliée à la première antenne ou à la deuxième antenne ; et/ou
ii) une liaison à partir d'un élément récepteur de l'émetteur-récepteur, destiné à recevoir ledit signal, qui est commutable pour être reliée à la première antenne ou à la deuxième antenne.

3. Appareil selon la revendication 2, lequel appareil est configuré pour offrir un mode d'étalonnage et un mode de fonctionnement normal ;
dans le mode d'étalonnage, l'agencement commutateur étant configuré pour relier un élément parmi l'élément émetteur et l'élément récepteur à la deuxième antenne ; et
dans le mode de fonctionnement normal, l'agencement commutateur étant configuré pour relier ledit un élément parmi l'élément émetteur et l'élément récepteur à la première antenne.

4. Appareil selon l'une quelconque des revendications précédentes, lequel appareil est configuré pour offrir un mode d'étalonnage et un mode de fonctionnement normal et, dans le mode d'étalonnage, le dispositif d'étalonnage étant configuré pour déterminer le retard et, dans le mode de fonctionnement normal, l'appareil étant configuré pour effectuer une détermination de temps de vol de signaux envoyés entre l'appareil et au moins un dispositif distant à l'aide, en partie, du retard déterminé par le dispositif d'étalonnage.

5. Appareil selon l'une quelconque des revendications précédentes, l'émetteur-récepteur duquel appareil comprend un émetteur-récepteur à bande ultra large.

6. Appareil selon l'une quelconque des revendications précédentes, dans lequel le dispositif d'étalonnage est configuré pour déterminer le retard à un ou plusieurs des moments suivants :
i) au démarrage de l'appareil ;
ii) périodiquement ;
iii) en réponse à un besoin d'envoyer un message destiné à être utilisé dans une mesure de distance préalablement à l'envoi d'un signal de mesure de distance depuis ladite première antenne.

7. Appareil selon l'une quelconque des revendications précédentes, dans lequel le dispositif d'étalonnage est configuré pour déterminer une fonction de corrélation croisée sur la base d'une corrélation croisée du signal envoyé depuis une antenne parmi la première et la deuxième antenne et le signal reçu par le biais de l'autre antenne parmi la première et la deuxième antenne, le retard étant basé sur l'identification d'un pic dans la fonction de corrélation croisée à la suite d'un pic initial.

8. Appareil selon l'une quelconque des revendications précédentes, dans lequel le retard comprend un retard introduit par au moins la première antenne, ladite circuiterie d'antenne et des composants de traitement de signal analogique de l'appareil.

9. Dispositif comportant l'appareil selon l'une quelconque des revendications 1 à 8, le dispositif comprenant soit un badge automobile type porte-clé, soit un véhicule comprenant un système de contrôle d'accès dont l'appareil fait partie, soit un système de contrôle d'accès.
